Europäisches Patentamt

**European Patent Office**

Office européen des brevets

(19)

(11) Numéro de publication: **0 005 493**
**B1**

(12) **FASCICULE DE BREVET EUROPEEN**

(45) Date de publication du fascicule de brevet: **25.11.81**

(51) Int. Cl.³: **F 22 B 37/32, B 01 D 45/16**

(21) Numéro de dépôt: **79101380.8**

(22) Date de dépôt: **07.05.79**

(54) Elément de redressage d'écoulement de vapeur sèche, et de séparation entre vapeur et liquide.

(30) Priorité: **12.05.78 FR 7814213**
**06.04.79 FR 7908783**

(43) Date de publication de la demande:
**28.11.79 Bulletin 79/24**

(45) Mention de la délivrance du brevet:
**25.11.81 Bulletin 81/47**

(84) Etats Contractants Désignés:
**BE CH DE FR GB IT SE**

(56) Documents cités:
**DE - B - 1 262 288**
**FR - A - 1 397 181**
**FR - A - 1 535 853**
**US - A - 3 884 658**

(73) Titulaire: **STEIN INDUSTRIE Société anonyme dite:**
**19-21, Avenue Morane Saulnier B.P. 74**
**F-78140 Velizy Villacoublay (FR)**

(73) Titulaire: **ELECTRICITE DE FRANCE Service National**
**2, rue Louis Murat**
**F-75008 Paris (FR)**

(72) Inventeur: **Andro, Jean**
**2, Allée d'Alsace**
**F-78170 La Celle Saint-Cloud (FR)**
Inventeur: **Bessouat, Roger**
**15, rue Ribera**
**F-75016 Paris (FR)**
Inventeur: **Cerdan, Jean-Pierre**
**5, rue de la Sente de Chatou**
**F-78800 Houilles (FR)**
Inventeur: **Talleu, Patrick**
**15, rue Esther Lacroix**
**FR-78400 Chatou (FR)**

(74) Mandataire: **Weinmiller, Jürgen et al,**
**Zeppelinstrasse 63**
**D-8000 München 80 (DE)**

Courier Press, Leamington Spa, England.

Elément de redressage d'écoulement de vapeur sèche et de séparation entre
vapeur et liquide

La présente invention concerne un élément de redressage d'écoulement de vapeur sèche et de séparation entre vapeur et liquide, comprenant un tube vertical externe d'arrivée du mélange de vapeur et de liquide à séparer mis en écoulement descendant tourbillonnaire, et un tube interne coaxial de recueil de vapeur sèche, muni de moyens de redressage de l'écoulement de ladite vapeur sèche, le bord inférieur du tube externe étant à un niveau inférieur à celui du bord supérieur du tube interne.

Les éléments connus de genre, dans lesquels le liquide ruisselant le long de la paroi interne du tube externe et la vapeur humide à son voisinage sont en mouvement tourbillonnaire, n'assurent pas une très bonne séparation entre vapeur et liquide, du fait que la vapeur qui tend à remonter entre les tubes et le liquide qui continue à ruisseler vers le bas à partir du bord inférieur du tube externe ont des trajets qui se croisent, de sorte que le liquide entraîne encore de la vapeur, et la vapeur montante des gouttelettes de liquide.

La demande de brevet eurpéen 78101446.9, qui appartient à l'état de la technique conformément à l'art. 54(3) et (4) de la CBE, porte sur des dispositifs auxiliaires permettant d'épurer les deux fractions de liquide et de vapeur encore humide. Ceux-ci compliquent cependant quelque peu l'appareillage et augmentent son encombrement.

La présente invention a pour but de procurer un élément de redressage d'écoulement de vapeur sèche et de liquide et de séparation entre vapeur et liquide qui procure une vapeur pauvre en liquide et un liquide pauvre en vapeur dès leur séparation, sans augmenter notablement la complexité de l'appareillage d'un séparateur de liquide et de vapeur et sans modifier son encombrement.

L'élément selon l'invention est caractérisé en ce qu'il comprend des orifices pratiqués sur le pourtour du bord inférieur du tube externe, et de largeur décroissant vers le haut et que les bords des orifices sont en saillie ver l'intérieur sur la paroi interne du tube externe, de façon à diriger le liquide ruisselant sur celle-ci vers les parties pleines de part et d'autre des orifices.

Il comporte en outre de préférence au moins l'une des caractéristiques suivantes:

— les orifices pratiqués sur le pourtour du bord inférieur du tube externe ont une forme générale triangulaire à sommet vers le haut, suivie dans le bas d'une découpe à bords verticaux, et l'élément comporte en outre des organes de redressage de l'écoulement du liquide descendant par gravité le long de la paroi interne du tube externe.

— Les organes de redressage de l'écoulement du liquide sont constitués par des éléments de tôle soudés sur la paroi interne du tube externe, et inclinés par rapport à la verticale de façon à infléchir la direction d'écoulement de l'eau ruisselant sur la paroi interne du tube externe vers la verticale.

— La partie inférieure du tube est enserrée dans un cadre polygonal comportant à chaque angle des épaulements réservant en coopération avec les épaulements des cadres des éléments adjacents des fentes parallèles aux côtés des cadres permettant la remontée vers le haut entre les cadres de la vapeur sensiblement débarrassée de liquide évacuée par les orifices du pourtour du tube extérieur.

— Les orifices pratiqués sur le pourtour du bord inférieur du tube externe ont des axes inclinés par rapport à la verticale d'un angle correspondant sensiblement à l'angle avec la verticale de la direction d'écoulement du liquide le long de la paroi interne du tube externe.

— Lorsque les orifices sont en saillie sur la paroi interne du tube externe, la partie inférieure du rebord le plus long des orifices comporte une barrette soudée au tube interne.

— Le bord des ouvertures est de forme sensiblement parabolique.

L'invention est décrite ci-après plus en détail à l'aide de deux exemples de réalisation d'un élément.

La figure 1 représente une première forme de réalisation de l'élément selon l'invention en coupe axiale selon l'axe I—I de la figure 2.

La figure 2 représente le même élément en plan vue de dessus.

La figure 3 représente une vue développée partielle de la paroi interne du tube externe de la figure 1.

La figure 4 représente une coupe par un plan perpendiculaire à l'axe du tube externe d'une seconde forme de réalisation d'un élément selon l'invention au niveau des orifices d'évacuation de la vapeur.

La figure 5 représente une vue développée d'une partie du tube externe de l'élément de la figure 4, selon l'axe V—V de la figure 4.

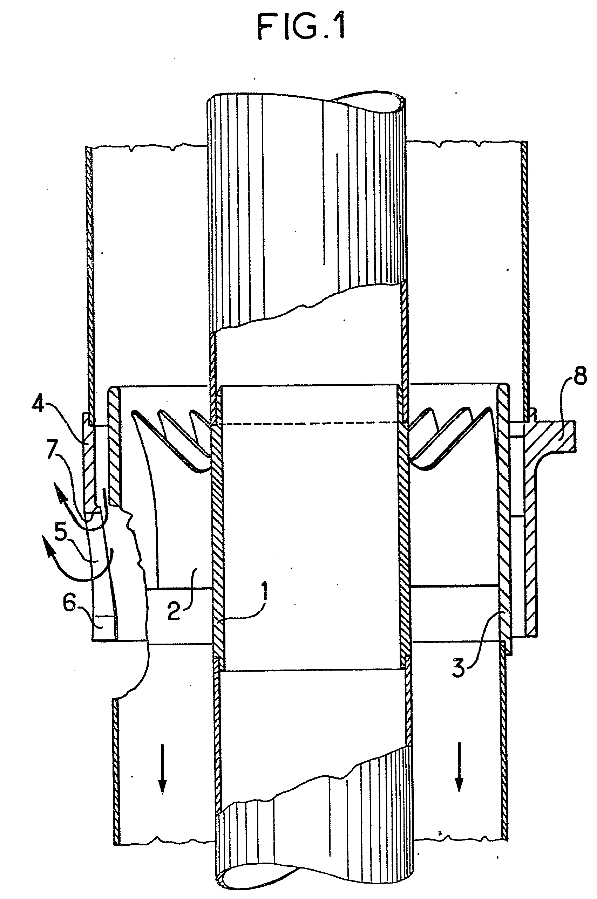

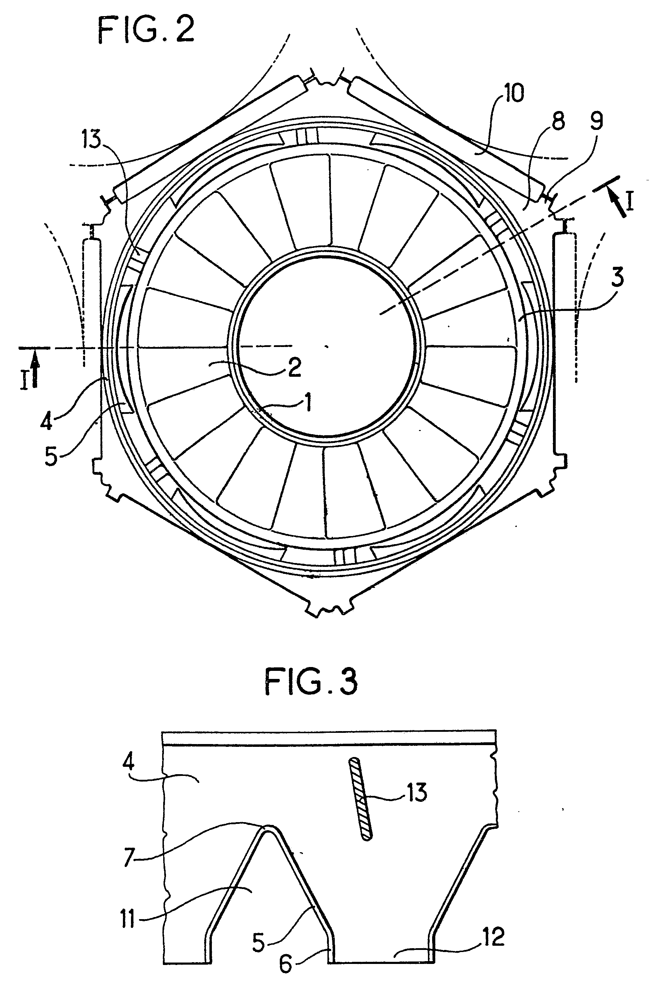

L'élément représenté sur la figure 1 fait partie d'un séparateur "cyclône", sur un circuit de vapeur d'eau humide issue d'une turbine de détente dans une centrale de production d'énergie électrique. Un manchon interne 1 est muni sur son pourtour d'aubes 2 de redressage de l'écoulement de la vapeur sèche fixées par ailleurs à un tube interne 3. Ce dernier est disposé à faible distance de la paroi interne d'un tube externe 4, de façon à assurer un resserrement de la section de passage offerte à l'écoulement du liquide et de la vapeur humide, et par suite une accélération de l'écoulement du liquide, qui s'écoule vers le bas au-dessous du bord du tube externe 4 sous forme de jets. Ce dernier est percé à intervalles réguliers sur son bord inférieur d'ouvertures 11 (figure 3) de forme générale triangulaire (partie 5), se terminant par une découpe 6 à bord verticaux.

Le bord de ces ouvertures est en saillie vers l'intérieur, comme on le voit en 7 sur la figure 1, de sorte que l'eau qui ruisselle sur la surface interne du tube externe se répartit de part et d'autre des ouvertures, en s'écoulant sur les parties pleines 12 (figure 3), tandis que la vapeur s'échappe par les ouvertures. L'élément comprend un cadre hexagonal 8 ou polygonal, dans lequel est enserrée la partie inférieure du tube externe, et des butées 9 aux angles de ce cadre permettent de réserver entre deux éléments adjacents des fentes 10 permettant à la vapeur séparée issue des ouvertures de remonter entre les tubes extérieurs.

Le redressage de l'écoulement de l'eau circulant sur la face interne du tube externe est assuré par des éléments de tôle 13 soudés sur celle-ci, inclinés par rapport à la verticale de façon à infléchir l'écoulement vers la verticale.

Les tubes externe et interne mentionnés ci-dessus sont naturellement destinés à être soudés sur les tubes externe et interne d'un séparateur à faisceaux de tubes de séparation comportant à leur extrémité supérieure un organe imprimant à la vapeur humide un mouvement tourbillonnaire, les tubes internes se prolongeant par des tubes d'évacuation de vapeur sèche débouchant dans une chambre de vapeur sèche.

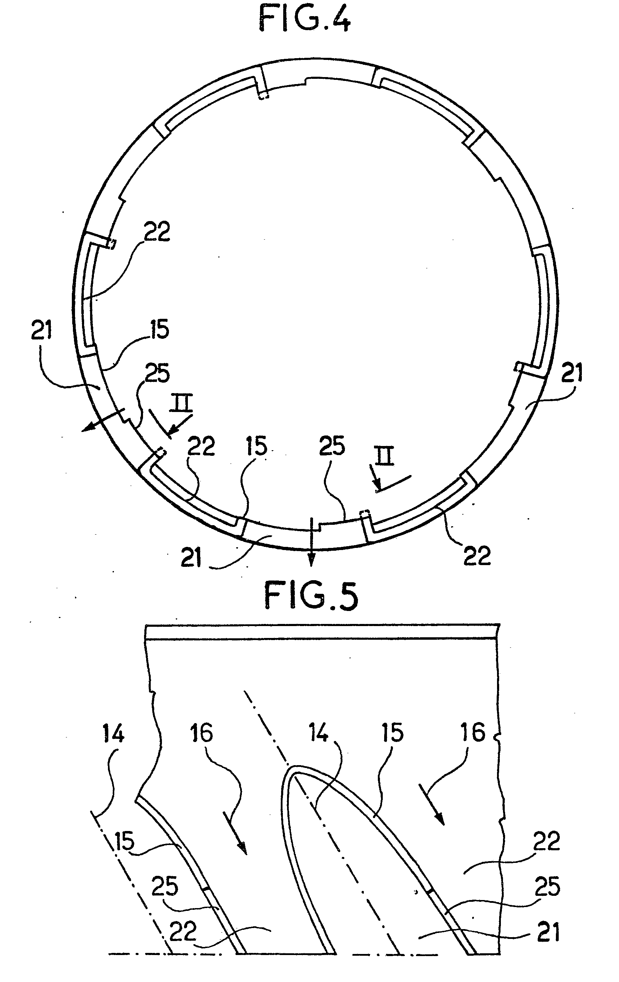

Dans les figures 4 et 5, la partie inférieure du tube externe de l'élément de séparation comprend des ouvertures 21 séparées par des parties pleines 22. Mais elle ne comporte pas d'éléments de tôle rapportés de redressage de l'écoulement de l'eau ruisselant sur la paroi interne du tube. Les ouvertures ne sont pas d'axe vertical, mais de forme parabolique et oblique, d'axe 14 faisant un angle de 30° par exemple avec la verticale, de façon qu'il soit orienté sensiblement parallèlement à la direction d'écoulement de l'eau représentée par les flèches 16, qui est fonction de l'angle de mise en rotation initiale du mélange à séparer.

Le bord 15 des ouvertures 21 est en saillie vers l'intérieur, et il comporte sur l'extrémité du côté le plus long une barrette plus en saillie 25 qui est soudée sur le tube interne, de façon à éviter les vibrations.

Bien que les éléments de redressage et de séparation qui viennent d'être décrits en référence aux figures paraissent les formes d'exécution préférables, on comprendra que diverses modifications peuvent leurs être apportées sans sortir du cadre de l'invention, certains de leurs organes pouvant être remplacés par d'autres qui joueraient le même rôle technique. En particulier, les ouvertures du bas du tube externe peuvent ne pas être de forme triangulaire, mais sensiblement parabolique. Les tôles déflectrices de l'écoulement du liquide peuvent ne pas être planes, mais incurvées, et leur inclinaison par rapport à la verticale peut être différente. Lorsque les orifices ont leurs axes inclinés par rapport à la verticale, l'inclinaison de ceux-ci doit être adaptée aux conditions d'écoulement de l'eau ruisselant sur le tube externe.

**Revendications**

1. Elément de redressage d'écoulement de vapeur sèche et de séparation entre vapeur et liquide, comprenant un tube vertical externe (4) d'arrivée du mélange de vapeur et de liquide à séparer mis en écoulement descendant tourbillonnaire, et un tube interne coaxial (3) de recueil de vapeur sèche, muni de moyens de redressage de l'écoulement de ladite vapeur sèche (2), le bord inférieur du tube externe étant à un niveau inférieur à celui du bord supérieur du tube interne, caractérisé en ce qu'il comprend des orifices (11, 21) pratiqués sur le pourtour du bord inférieur du tube externe, et de largeur décroissant vers le haut, et que les bords des orifices sont en saillie vers l'intérieur sur la paroi interne du tube externe, de façon à diriger le liquide ruisselant sur celle-ci vers les parties pleines (12, 22) de part et d'autre des orifices.

2. Elément selon la revendication 1, caractérisé en ce que les orifices pratiqués sur le pourtour du bord inférieur du tube externe ont une forme générale triangulaire à sommet vers le haut (5), suivie dans le bas d'une découpe (6) à bords verticaux, et en ce qu'il comporte en outre des organes (13) de redressage de l'écoulement du liquide descendant par gravité le long de la paroi interne du tube externe.

3. Elément selon la revendication 2, caractérisé en ce que les organes de redressage de l'écoulement du liquide sont constitués par des éléments de tôle (13) soudés sur la paroi interne du tube externe, et inclinés par rapport à la verticale, de façon à infléchir la direction d'écoulement de l'eau ruisselant sur la paroi interne du tube externe vers la verticale.

4. Elément selon l'une des revendications 1 à 3, caractérisé en ce que la partie inférieure du tube externe est enserrée dans un cadre polygonal (8) comportant à chaque angle des butées (9) réservant en coopération avec les butées des cadres des éléments adjacents des fentes (10) parallèles aux côtés des cadres, permettant la remontée vers le haut entre les cadres de la vapeur sensiblement débarassée de liquide évacuée par les orifices du pourtour du tube externe.

5. Elément selon la revendication 1, caractérisé en ce que les orifices (21) pratiqués sur le pourtour du bord inférieur du tube externe ont des axes (14) inclinés par rapport à la verticale d'un angle correspondant sensiblement à l'angle avec la verticale de la direction (16) s'écoulement du liquide le long de la paroi interne du tube externe.

6. Elément selon la revendication 5, caractérisé en ce que la partie inférieure du bord le plus long des orifices comporte une barrette (25) soudée au tube externe.

7. Elément selon la revendication 1, caractérisé en ce que le bord (15) des ouvertures est de forme sensiblement parabolique.

## Patentansprüche

1. Element zum Geraderichten einer Strömung von Trockendampf und zur Trennung von Dampf und Flüssigkeit, mit einem vertikalen äußeren Rohr (4) für die Zuführung der zu trennenden Mischung von Dampf und Flüssigkeit, die in einen nach unten gerichteten Wirbelfluß versetzt wurde, und einem koaxialen inneren Rohr (3) für das Auffangen von Trockendampf, das mit Mitteln zum Geraderichten der Trockendampfströmung (2) versehen ist, wobei der untere Rand des äußeren Rohrs sich auf einem niedrigeren Niveau als der obere Rand des inneren Rohrs befindet, dadurch gekennzeichnet, daß es Öffnungen (11, 21) aufweist, die auf dem Umfang des unteren Rands des äußeren Rohrs angebracht sind und deren Breite sich nach oben verringert, und daß die Ränder der Öffnungen nach innen auf der Innenwand des äußeren Rohrs vorspringen, so daß die ablaufende Flüssigkeit auf die nicht durchbrochenen Bereiche (12, 22) zu beiden Seiten der Öffnungen gerichtet wird.

2. Element nach Anspruch 1, dadurch gekennzeichnet, daß die auf dem Umfang des unteren Rands des äußeren Rohrs angebrachten Öffnungen eine allgemein dreieckige Form mit nach oben gerichteter Spitze (5) aufweisen, die unten in einen Ausschnitt (6) mit senkrechten Rändern übergeht, und daß es außerdem Vorrichtungen (13) zum Geraderichten der Strömung der Flüssigkeit aufweist, die durch Schwerkraft längs der Innenwand des äußeren Rohrs nach unten fließt.

3. Element nach Anspruch 2, dadurch gekennzeichnet, daß die Vorrichtungen zum Geraderichten der Strömung der Flüssigkeit aus Blechteilen (13) bestehen, die auf die Innenwand des äußeren Rohrs geschweißt sind und in Bezug auf die Senkrechte geneigt sind, so daß sie die Strömungsrichtung des auf der Innenwand des äußeren Rohrs ablaufenden Wassers zur Senkrechten hin umlenken.

4. Element nach einem der Ansprüche 1 bis 3, dadurch gekennzeichnet, daß der untere Teil des äußeren Rohrs in einen vieleckigen Rahmen (8) eingeschlossen ist, der an jeder Ecke Anschläge (9) aufweist, die in Zusammenarbeit mit den Anschlägen der Rahmen der benachbarten Elemente Schlitze (10) parallel zu den Seiten der Rahmen aussparen, die das Aufsteigen des im wesentlichen von Flüssigkeit, die durch die Öffnungen des Umfangs des äußeren Rohrs abgeleitet wurde, befreiten Dampfes nach oben zwischen den Rahmen ermöglichen.

5. Element nach Anspruch 1, dadurch gekennzeichnet, daß die Achsen (14) der Öffnungen (21), die auf dem Umfang des unteren Randes des äußeren Rohres angebracht sind, in Bezug auf die Senkrechte in einem Winkel geneigt sind, der im wesentlichen der Neigung der Strömungsrichtung (16) der Flüssigkeit entlang der Innenwand des äußeren Rohrs zur Senkrechten entspricht.

6. Element nach Anspruch 5, dadurch gekennzeichnet, daß der untere Teil des längsten Randes der Öffnungen einen Stab (25) aufweist, der an das äußere Rohr angeschweißt ist.

7. Element nach Anspruch 1, dadurch gekennzeichnet, daß der Rand (15) der Öffnungen eine im wesentlichen parabolische Form aufweist.

## Claims

1. A component for de-spinning a flow of dry vapour and for separating liquid from vapour, including an outer vertical tube (4) for admission of the vapour and liquid mixture to be separated which is set in a downward spinning flow and a coaxial inner tube (3) for collecting dry vapour, provided with means for de-spinning the flow of said dry vapour (2), the lower edge of the outer tube being at a level lower than that of the upper edge of the inner tube, characterized in that it includes orifices (11, 21) formed in the periphery of the lower edge of the outer tube whose width decreases upwards, and that the edges of the orifices project inwards from the inner wall of the outer tube so as to direct the liquid which streams thereon, towards the solid parts (12, 22) on either side of the orifices.

2. A component according to claim 1, characterized in that the orifices formed round the periphery of the lower edge of the outer tube have a generally triangular shape with an upturned apex (5), followed, at the bottom, by a cut-out (6) with vertical edges and in that it further includes parts (13) for de-spinning the flow of liquid which descends by gravity along the inner wall of the outer tube.

3. A component according to claim 2, characterized in that the parts for de-spinning the flow of the liquid are constituted by steel sheets (13) welded to the inner wall of the outer tube and inclined with respect to the vertical, so as to deflect the flow direction of the water which streams on the inner wall of the outer tube towards the vertical.

4. A component according to one of the claims 1 to 3, characterized in that the lower portion of the outer tube is surrounded by a polygonal frame (8) which comprises, at each angle, shoulders (9) which co-operate with the shoulders of the frames of the adjacent components to provide slots (10) parallel to the sides of the frames, said slots allowing the vapour substantially free from liquid removed through the orifices of the periphery of the outer tube to flow upwards between the frames.

5. A component according to claim 1, characterized in that the orifices (21) formed on the periphery of the lower edge of the outer tube have axes (14) which are inclined with respect to the angle with the vertical of the direction (16) of flow of the liquid along the inner wall of the outer tube.

6. A component according to claim 5, characterized in that the lower portion of the longest edge of the orifices includes a rim (25) welded to the outer tube.

7. A component according to claim 1, characterized in that the edge (15) of the openings has a substantially parabolic shape.

0 005 493

# FIG.1

1

0 005 493

FIG. 2

FIG. 3

# FIG.4

# FIG.5